# EUROPÄISCHE PATENTSCHRIFT

(11) **EP 0 712 520 B1**
(45) Veröffentlichungstag und Bekanntmachung des Hinweises auf die Patenterteilung: **22.09.1999**
(21) Anmeldenummer: 95923224.0
(22) Anmeldetag: 02.06.1995
(51) Int. Cl.: G07F 7/10

(54) **VERFAHREN ZUR ECHTHEITSPRÜFUNG EINES DATENTRÄGERS**
PROCESS FOR VERIFYING THE AUTHENTICITY OF A DATA CARRIER
PROCEDE DE VERIFICATION DE L'AUTHENTICITE D'UN SUPPORT DE DONNEES

(30) Priorität: 06.06.1994 DE 4419805
(43) Veröffentlichungstag der Anmeldung: 22.05.1996
(73) Patentinhaber: Giesecke & Devrient GmbH, 81677 München (DE)
(72) Erfinder: LAMLA, Michael, D-80935 München (DE); RANKL, Wolfgang, D-81677 München (DE); WEIKMANN, Franz, D-81675 München (DE); EFFING, Wolfgang, D-82205 Gilching (DE)
(74) Vertreter: Klunker . Schmitt-Nilson . Hirsch
(86) Internationale Anmeldenummer: EP9502104
(87) Internationale Veröffentlichungsnummer: WO9534054

(56) Entgegenhaltungen:
- EP-A- 0 256 768
- EP-A- 0 337 185
- EP-A- 0 409 701
- DE-A- 4 230 866
- FR-A- 2 471 003
- US-A- 5 034 596

## Beschreibung

Die Erfindung betrifft ein Verfahren zur Prüfung der Echtheit eines Datenträgers gemäß dem Oberbegriff des Anspruchs 1. Ferner betrifft die Erfindung eine Datenträgeranordnung zur Durchführung des Verfahrens.

Ein Verfahren zur Echtheitsprüfung ist z. B. aus der EP-A1 0 321 728 bekannt. Bei dem bekannten Verfahren wird der Datenträger durch ein von einer externen Einrichtung gesendetes Steuersignal von dem Normalbetrieb in den Kontrollbetrieb, in dem die Echtheitsprüfung erfolgt, umgeschaltet. Zu diesem Zweck besitzt der Datenträger eine zusätzliche Schaltlogik, die in Abhängigkeit von dem externen Signal diese Umschaltung vornimmt. Im Kontrollbetrieb werden dann dem Datenträger von außen Kontrolldaten zugeführt, die dann von einer zusätzlichen elektronischen Schaltung, z. B. in Form eines Analogrechners, bearbeitet werden. Die Bearbeitungszeit der Kontrolldaten durch den Analogrechner stellt hierbei ein Echtheitsmerkmal für den Datenträger dar. Bei dem bekannten Verfahren wird die in dem Kontrollbetrieb des Datenträgers stattfindende Echtheitsprüfung von dem Normalbetrieb entkoppelt, damit der Normalbetrieb, der in der Regel nach standardisierten Protokollen abläuft, nicht durch die Echtheitsprüfung gestört wird. Das bedeutet jedoch, daß vor jeder Echtheitsprüfung ein Umschalten mittels der zusätzlichen Schaltlogik vom Normalbetrieb in den Kontrollbetrieb notwendig ist.

Die Aufgabe der Erfindung besteht nun darin, ein Verfahren zur Echtheitsprüfung eines Datenträgers vorzuschlagen, bei dem die Echtheitsprüfung kompatibel mit den bereits bestehenden standardisierten Protokollen ist und mit geringem schaltungstechnischen Aufwand erfolgen kann.

Die Aufgabe wird durch die im Anspruch 1 angegebenen Merkmale gelöst.

Der Grundgedanke der Erfindung besteht darin, daß das erste Senden bzw. Empfangen der zur Echtheitsprüfung verwendeten Daten während der Einschaltsequenz für den Datenträger stattfindet, in der die Datenleitung für den Datenaustausch mit einer externen Einrichtung noch keinen definierten Zustand aufweist. Beispielsweise kann gemäß der Norm ISO/IEC 7816-3 die Datenleitung für einen definierten Zeitbereich während der Einschaltsequenz sich in einem undefinierten Zustand befinden. Da das erste Senden bzw. Empfangen der Daten innerhalb des durch die Norm definierten Zeitbereichs abgeschlossen ist, wird der für die Kommunikation mit Chipkarten standardisierte Datenaustausch nicht gestört. Dadurch kann das Prüfverfahren gemäß der Erfindung standardkonform mit bereits bestehenden Protokollen ablaufen.

Der Datenträger verfügt über eine zusätzliche spezielle Schaltung, die innerhalb des besagten Zeitbereichs, für den die Datenleitung keinen durch das Protokoll definierten Zustand aufweisen muß, die zur Echtheitsprüfung benötigten Daten an eine externe Einrichtung sendet bzw. von dieser empfängt.

In einer ersten Ausführungsform kann z. B. eine in Hardware realisierte Kennung des Datenträgers innerhalb des besagten Zeitbereichs an die externe Einrichtung übertragen werden. Die externe Einrichtung, z. B. das Kartenlesegerät, verfügt ebenfalls über eine spezielle Schaltung, die ein Empfangen der von der Karte gesendeten Daten innerhalb dieses Zeitbereichs ermöglicht, damit das Gerät die Echtheitsprüfung durchführen kann. Aber auch für den Fall, daß das Gerät keine solche spezielle Schaltung aufweist und somit nicht in der Lage ist, innerhalb der besagten Zeitdauer die von der Karte gesendeten Daten zu empfangen, wird das Kommunikationsprotokoll durch das Senden der Daten nicht gestört. Dadurch können keine Fehler im Protokollablauf auftreten, wenn die Karte mit einem herkömmlichen Gerät innerhalb dieser Zeitdauer kommuniziert.

Gemäß einer Weiterbildung kann die auf dem integrierten Schaltkreis des Datenträgers befindliche spezielle Schaltung innerhalb des besagten Zeitbereichs auch eine Zufallszahl generieren, die dann von der speziellen Schaltungslogik des Datenträgers mit der Kennung des Datenträgers logisch verknüpft wird, wobei das Ergebnis der Verknüpfung innerhalb des besagten Zeitbereiches, jedoch spätestens im Answer-To-Reset-Signal (ATR) vom Datenträger an die externe Einrichtung übertragen wird. Durch die Verwendung einer Zufallszahl wird ein Replayangriff, d. h. die Wiedereinspielung der zuvor gesendeten Daten, unmöglich gemacht.

In einer weiteren Ausführungsform kann auch die externe Einrichtung, z. B. das Kartenlesegerät, eine zusätzliche Schaltung aufweisen, die zur Erzeugung der Zufallszahl dient. Die Zufallszahl wird dann vorzugsweise wegen der höheren Übertragungsgeschwindigkeit synchron zum Taktsignal innerhalb des besagten Zeitbereiches an den Datenträger gesendet. Die spezielle zusätzliche Schaltung des Datenträgers ist in der Lage, die gesendete Zufallszahl innerhalb des besagten Zeitbereichs, für den das Kontaktelement keinen definierten Zustand aufweisen muß, zu empfangen und zumindest einen Teil der empfangenen Zufallszahl innerhalb dieser Zeit wieder an die externe Einrichtung zurückzusenden. In Erweiterung hierzu kann die spezielle Schaltungslogik des Datenträgers auch die empfangene Zufallszahl mit der Kennung des Datenträgers logisch verknüpfen und das Ergebnis der Verknüpfung als Bestätigung für den Empfang der Zufallszahl innerhalb des besagten Zeitbereichs oder spätestens jedoch im ATR-Signal an die externe Einrichtung zurücksenden. Die externe Einrichtung kann dann anhand des von dem Datenträger empfangenen Ergebnisses der Verknüpfung nachprüfen, ob der Datenträger nachweislich fähig ist, innerhalb des besagten Zeitbereichs die gesendete Zufallszahl zu empfangen und richtig mit der Kennung des Datenträgers innerhalb einer vorbestimmten Zeit zu verknüpfen und an die externe Einrichtung zu übertragen. Das Vorhandensein des Ergebnisses der Verknüpfung im ATR-Signal stellt hierbei eine Klassenkennung für den Datenträger dar und kann als solche von der externen Einrichtung ausgewertet werden, wohingegen der Inhalt des Ergebnisses der Verknüpfung eine für den Datenträger individuelle Kennung darstellt.

Weitere Vorteile und vorteilhafte Weiterbildungen sind der Beschreibung der Erfindung anhand der Figuren entnehmbar.

Die Figuren zeigen:
- Fig. 1: eine Datenträgeranordnung zur Echtheitsprüfung,
- Fig. 2: den standardisierten Signalverlauf bei der Einschaltsequenz des Datenträgers,
- Fig. 3a - 3c: ein Ausführungsbeispiel des erfindungsgemäßen Prüfverfahrens, bei dem der Datenträger die Daten sendet,
- Fig. 4 und 5: jeweils ein Ausführungsbeispiel des erfindungsgemäßen Verfahrens, bei dem die Daten von einer externen Einrichtung gesendet und vom Datenträger empfangen werden,
- Fig. 6: eine Datenträgeranordnung, bestehend aus einer externen Einrichtung und einen Datenträger zur Echtheitsprüfung des Datenträgers,
- Fig. 7: ein Sicherheitsmodul, das Bestandteil der externen Einrichtung ist und mit dem die Echtheitsprüfung durchführbar ist,
- Fig. 7a: eine Datenträgeranordnung, bestehend aus einer externen Einrichtung und einem Datenträger zur Echtheitsprüfung des Datenträgers,
- Fig. 8a: einen Datenträger, in dem das Sicherheitsmodul untergebracht ist,
- Fig. 8b: einen Querschnitt durch das elektronische Modul des Datenträgers aus der Fig. 8a,
- Fig. 9: ein Prinzipschaltbild des Datenträgers,
- Fig. 10: ein Ausführungsbeispiel einer speziellen Schaltung,
- Fig. 11: ein weiteres Ausführungsbeispiel einer speziellen Schaltung des Datenträgers,
- Fig. 12: ein Bestandteil der speziellen Schaltung,
- Fig. 13 u. 14: ein Ablaufdiagramm zur Prüfung des Echtheitsmerkmals des Datenträgers.

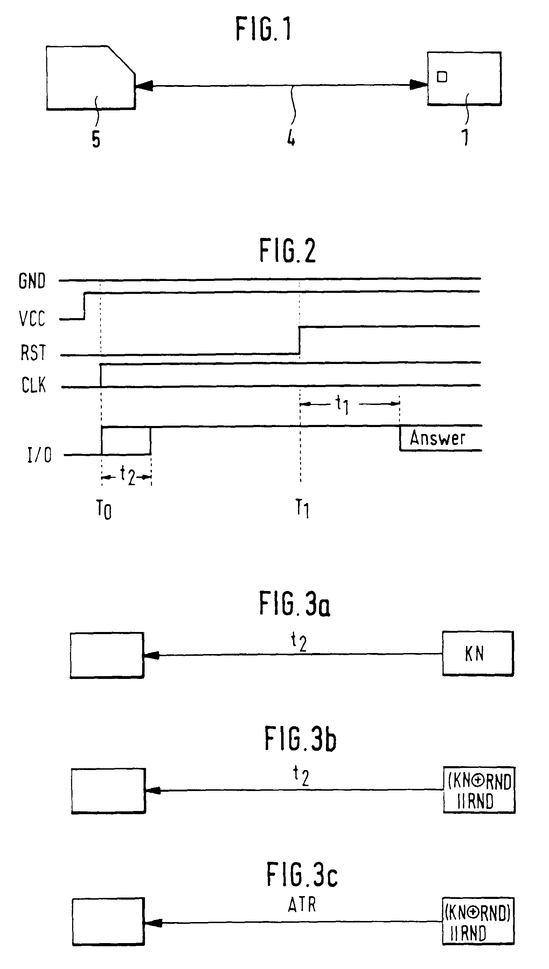

Fig. 1 zeigt eine Datenträgeranordnung zur Echtheitsprüfung eines Datenträgers in Form einer Chipkarte 1, die über eine Datenleitung 4 mit einer externen Einrichtung 5, z. B. Kartenlesegerät, kommuniziert. Bei der Chipkarte kann es sich um eine kontaktbehaftete Chipkarte oder um eine kontaktlose Chipkarte handeln, bei der die Kommunikation mit der externen Einrichtung berührungslos erfolgt.

Fig. 2 zeigt den Signalverlauf beim Reset des Datenträgers, wie er z. B. im internationalen Standard ISO/IEC 7816-3 genormt ist. Im einzelnen sind dies das Massepotential GND, die Versorgungsspannung VCC, das zum Rücksetzen des Datenträgers extern zugeführte Reset-Signal RST, das Taktsignal CLK und die Datenleitung I/O. Bei anliegender Versorgungsspannung und Stabilisierung der Spannung und Anliegen des Taktsignales zum Zeitpunkt T₀ befindet sich die Datenleitung I/O im Empfangsmodus für das von einer externen Einrichtung zum Zeitpunkt T₁ gelieferte Reset-Signal RST. Ab dem Zeitpunkt T₀ kann die Datenleitung I/O gemäß der besagten Norm für den Zeitbereich t₂ sich in einem undefinierten Zustand befinden. Entsprechend der Norm muß dieser Zeitbereich t₂ kleiner gleich 200 Taktzyklen, dividiert durch die Taktfrequenz f₁ sein. Nach Verstreichen dieser Zeitdauer muß sich die Datenleitung I/O in einem definierten Zustand befinden und kann daher nicht zum Senden bzw. Empfangen von Daten vor dem Reset-Signal RST verwendet werden. Mit dem Empfang des Reset-Signals RST zum Zeitpunkt T₁ antwortet der Datenträger nach der Zeitdauer t₁ mit dem Answer-To-Reset-Signal ATR.

Fig. 3a zeigt den ersten Sendevorgang, z. B. die Übertragung einer Kennung KN, des Datenträgers von diesem an eine externe Einrichtung innerhalb des Zeitbereiches t₂. Sobald das Taktsignal CLK anliegt, überträgt der Datenträger automatisch direkt die Kennung, z. B. die Serien-Nr. vorzugsweise synchron zum Taktsignal, an die externe Einrichtung. Die synchrone Übertragung ermöglicht eine höhere Sendegeschwindigkeit gegenüber einer asynchronen Übertragung. Selbstverständlich könnte die Übertragung der Serien-Nr. auch asynchron zum Taktsignal erfolgen, wenn dies innerhalb des Zeitbereiches t₂ durchführbar ist. In jedem Fall verfügt der Datenträger hierbei zusätzlich zu den üblichen Logik- und Speichereinheiten über eine spezielle Schaltung, die dieses schnelle Senden im genannten Zeitraum ermöglicht. Mit einem Standardkommando kann dann die externe Einrichtung die in einem Speicher des Datenträgers gespeicherte Serien-Nr. auslesen und diese mit der von dem Datenträger empfangenen Serien-Nr. vergleichen. Stimmt die von dem Datenträger mittels der speziellen Schaltung gesendete und die aus dem Speicher des Datenträgers ausgelesene Serien-Nr. überein, so ist der Datenträger nachweislich fähig, sehr schnell innerhalb des Zeitbereichs von t₂ die für die Echtheitsprüfung notwendigen Daten zu senden. Diese Eigenschaft ist ein Echtheitsmerkmal, das von keinem herkömmlichen Datenträger, d. h. einem Datenträger ohne diese spezielle Schaltung, erfüllt werden kann.

Der in Fig. 3b gezeigte Verfahrensschritt stellt eine Erweiterung des Verfahrens gemäß Fig. 3a dar. Dabei wird die Kennung KN mit einer vom Datenträger generierten Zufallszahl RND, z. B. Exklusiv Oder verknüpft, wobei das Ergebnis der Verknüpfung mit der generierten Zufallszahl RND zur externen Einrichtung gesendet wird. Die Zufallszahl wird innerhalb des Zeitbereichs von t₂ erzeugt. Vorzugsweise erfolgt die Übertragung des Ergebnisses der Verknüpfung mit der Zufallszahl RND ebenfalls innerhalb der Zeitdauer von t₂. Jedoch ist es auch möglich, wie dies in Fig. 3c dargestellt ist, das Ergebnis der Verknüpfung und die Zufallszahl im Answer-To-Reset-Signal des Datenträgers z. B. in den historical characters des ATR-Signals mit zu übertragen. Die externe Einrichtung kann dann gemäß dem normalen Protokollablauf in einem späteren Authentisierungsschritt die empfangene Zufallszahl mit der aus einem Speicher des Datenträgers ausgelesenen Kennung KN nach der gleichen logischen Operation wieder verknüpfen und das Ergebnis der Verknüpfung mit dem im ATR-Signal übertragenen Ergebnis der Verknüpfung des Datenträgers vergleichen. Durch die Verwendung einer Zufallszahl wird ein Replayangriff durch Wiedereinspielung der zuvor aufgezeichneten Daten unmöglich gemacht.

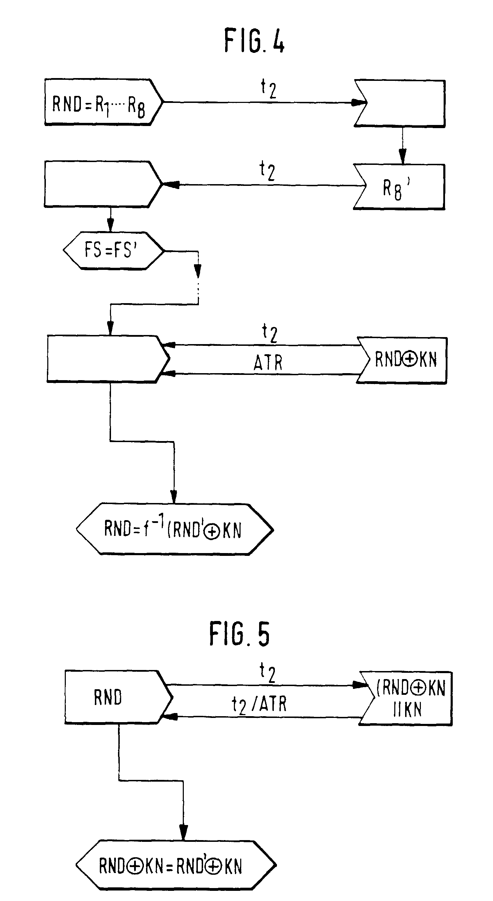

Fig. 4 zeigt nun ein weiteres Ausführungsbeispiel des erfindungsgemäßen Verfahrens. In einem ersten Verfahrensschritt sendet die externe Einrichtung innerhalb des Zeitraums t₂ eine Zufallszahl RND, die z. B. 8 Byte umfassen kann, an den Datenträger. Die Übertragung erfolgt vorzugsweise synchron zum Taktsignal, kann jedoch auch asynchron erfolgen. Innerhalb der Zeitdauer t₂ sendet der Datenträger wenigstens das letzte Byte R₈' der empfangenen Zufallszahl an die externe Einrichtung zurück. Die externe Einrichtung vergleicht daraufhin das letzte von ihr generierte Byte R₈ der Zufallszahl mit dem vom Datenträger empfangenen Byte R₈'. Stimmen diese überein, so konnte der Datenträger die gesendete Zufallszahl richtig empfangen und wenigstens einen Teil wieder zurücksenden. Die Tatsache, daß der Datenträger sehr schnell Daten empfangen kann, stellt hierbei ein Echtheitsmerkmal dar. Anstelle des letzten Bytes der Zufallszahl kann selbstverständlich der Datenträger auch die gesamte innerhalb des Zeitraums t₂ empfangene Zufallszahl wieder an die externe Einrichtung zurücksenden. Dies kann beispielsweise auch im ATR-Signal miterfolgen.

Ergänzend hierzu kann die innerhalb des Zeitraums t₂ von der externen Einrichtung empfangene Zufallszahl RND von der speziellen Schaltungslogik des Datenträgers mit der Kennung KN des Datenträgers durch eine logische Operation verknüpft werden. Als Verknüpfungsoperation kann z. B. eine Polynom-Modulo-Division mit der Kennung als Teilerpolynom für die Zufallszahl verwendet werden. Diese Verknüpfungsoperation ist dem Fachmann geläufig und wird daher hier nicht näher beschrieben. Die derart mit der Zufallszahl verknüpfte Kennung KN des Datenträgers kann dann innerhalb der Zeitdauer von t₂ oder im ATR-Signal des Datenträgers an die externe Einrichtung gesendet werden. Beide Varianten sind hier denkbar. Die externe Einrichtung erhält dann durch Ausführung einer zu der Verknüpfungsoperation inversen Funktion aus dem Ergebnis der Verknüpfung von Zufallszahl und Kennung wieder die durch den Datenträger empfangene Zufallszahl und vergleicht diese mit der von der externen Einrichtung generierten Zufallszahl. Stimmen diese überein, so zeigt dies, daß der Datenträger, insbesondere die spezielle Schaltung des Datenträgers, nachweislich fähig ist, sehr schnell die Zufallszahl zu empfangen und zu verknüpfen und das Ergebnis der Verknüpfung innerhalb von t₂ oder jedoch spätestens im ATR-Signal des Datenträgers, z. B. in den historical characters, an die externe Einrichtung zu senden.

Fig. 5 zeigt ein weiteres Ausführungsbeispiel, bei dem die von der externen Einrichtung gesendete Zufallszahl RND, die z. B. mehrere Bytes umfassen kann, innerhalb der Zeitdauer von t₂ von dem Datenträger empfangen wird, wobei entweder die ganze Zufallszahl oder zumindest das letzte Byte der gesendeten Zufallszahl je nach Länge der Zufallszahl mit der Kennung KN des Datenträgers Exklusiv Oder verknüpft wird, wobei das Ergebnis der Verknüpfung gemeinsam mit der Kennung des Datenträgers innerhalb der Zeitdauer von t₂ oder im ATR-Signal an die externe Einrichtung übertragen wird. Die externe Einrichtung führt dann nochmals die gleiche logische Operation ausgehend von der empfangenen Kennung KN und der generierten Zufallszahl RND aus und vergleicht das von der externen Einrichtung erhaltene Ergebnis der Verknüpfung mit dem von dem Datenträger empfangenen Ergebnis der Verknüpfung.

Die Ausführungen zu den Fig. 3 - 5 zeigen, daß die externe Einrichtung zur Prüfung des Echtheitsmerkmals des Datenträgers Operationen durchführen muß, die über die normale Kommunikation zwischen der externen Einrichtung und dem Datenträger hinausgehen. So wird beispielsweise von der externen Einrichtung eine Zufallszahl an den Datenträger übermittelt, die dort, wie oben beschrieben, mit einer Kennung logisch verknüpft wird und das Ergebnis der logischen Verknüpfung wird in der externen Einrichtung überprüft.

Es ist möglich, die Mikroprozessoreinheit der externen Einrichtung von vornherein so auszubilden, daß sie die zur Prüfung des Echtheitsmerkmals des Datenträgers notwendigen Operationen durchführen kann. Bei bereits in Betrieb befindlichen externen Einrichtungen ist die Mikroprozessoreinheit jedoch nicht derartig ausgebildet. Soll mit diesen dennoch das Echtheitsmerkmal des Datenträgers geprüft werden, ist es besonders vorteilhaft, die externe Einrichtung über ihre Mikroprozessoreinheit hinaus nachträglich mit einem Sicherheitsmodul zu versehen, mit dem die Prüfung durchführbar ist. In vielen bereits in Betrieb befindlichen externen Einrichtungen ist ohnehin mindestens ein zusätzlicher Steckplatz für mindestens ein zusätzliches Modul vorgesehen, so daß eine besondere Anpassung der externen Einrichtung nicht notwendig ist. Diese Steckplätze sind von außen nicht ohne weiteres zugänglich, so daß auch bezüglich der Sicherheit keinerlei Bedenken bestehen, die für die Prüfung des Echtheitsmerkmals notwendigen Funktionen in einem separaten Sicherheitsmodul unterzubringen.

In einem besonders vorteilhaften Ausführungsbeispiel kann das Sicherheitsmodul genau wie der Datenträger als Chipkarte ausgebildet sein, die wegen der räumlichen Enge in den meisten externen Einrichtungen vorzugsweise als Plug-In (das ist eine Chipkarte mit kleineren Abmessungen als eine Standardchipkarte) ausgebildet ist.

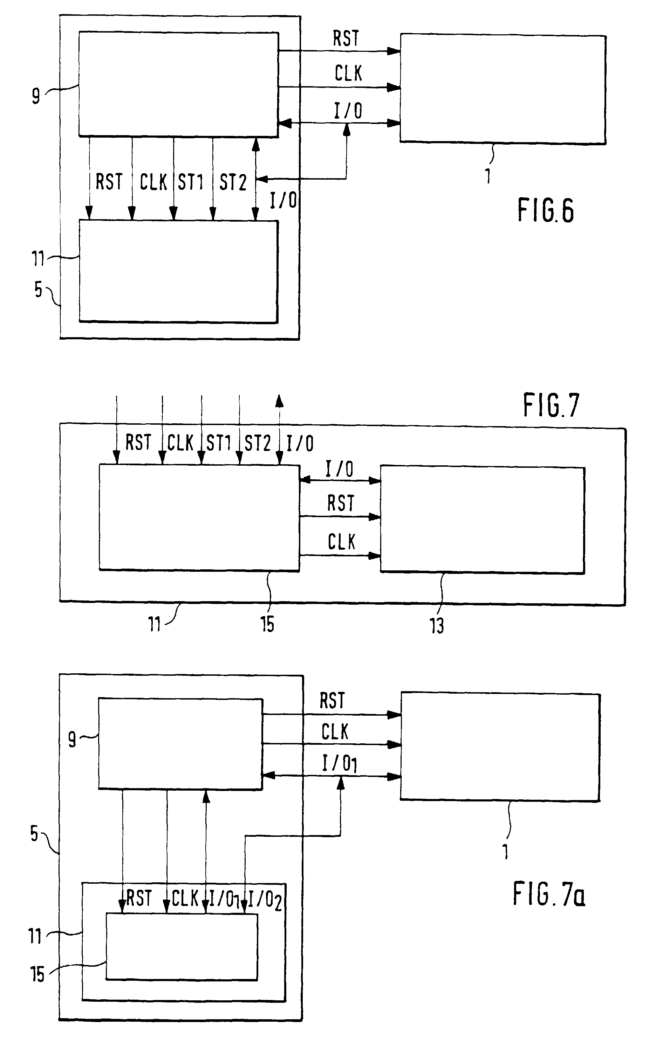

Fig. 6 zeigt schematisch eine Datenträgeranordnung zur Echtheitsprüfung eines Datenträgers in Form einer Chipkarte 1, die mit einer externen Einrichtung 5 kommuniziert. Hierbei sind nur die für das Verständnis der nachfolgenden Ausführungen notwendigen Verbindungsleitungen zwischen den Komponenten gezeigt. Die externe Einrichtung 5 verfügt unter anderem über die Mikroprozessoreinheit 9 und über ein Sicherheitsmodul 11. Bei einer Kommunikation zwischen dem Datenträger 1 und der externen Einrichtung 5 wird zunächst die Mikroprozessoreinheit 9 eingeschaltet, die daraufhin erkennt, daß sich ein Datenträger in der externen Einrichtung 5 befindet. Daraufhin wird von der Mikroprozessoreinheit 9 das Sicherheitsmodul 11 eingeschaltet und dazu aufgefordert, das Echtheitsmerkmal des Datenträgers 1 zu testen. Dies kann beispielsweise über die Steuerleitungen ST1 und ST2 geschehen, an die ein definiertes Signal angelegt wird, das der Aufforderung entspricht, z. B. an der Steuerleitung ST1 und an der Steuerleitung ST2 eine logische 1. Daraufhin wird in dem Sicherheitsmodul 11 eine Zufallszahl generiert, die nach Aufforderung durch die Mikroprozessoreinheit 9 zunächst im Sicherheitsmodul 11 gespeichert wird. Die Aufforderung kann beispielsweise wiederum über die Steuerleitungen ST1 und ST2 ergehen, an die wiederum ein definiertes Signal angelegt wird, z. B. eine logische 0 an der Steuerleitung ST1 und eine logische 1 an der Steuerleitung ST2.

Nachdem die Zufallszahl in dem Sicherheitsmodul 11 gespeichert ist, wird von der Mikroprozessoreinheit 9 der Datenträger 1 eingeschaltet, wie es bereits im Zusammenhang mit der Fig. 2 erläutert wurde. Bei anliegender Versorgungsspannung an dem Datenträger 1 und Stabilisierung der Spannung und Anliegen des Taktsignals zum Zeitpunkt T₀ an dem Datenträger 1 befindet sich die Datenleitung I/O zum Datenträger 1 im Empfangsmodus für das von der Mikroprozessoreinheit 9 zum Datenträger gelieferte Reset-Signal RST. Ab dem Zeitpunkt T₀ kann sich die zum Datenträger 1 führende Datenleitung I/O für den Zeitbereich t₂ in einem undefinierten Zustand befinden, wie es bereits im Zusammenhang mit Fig. 2 beschrieben worden ist. Dieser Zeitbereich t₂ wird benutzt, um mit Hilfe des Sicherheitsmoduls 11 das Echtheitsmerkmal des Datenträgers 1 zu testen.

Dazu sendet das Sicherheitsmodul 11 nach Einschalten des Datenträgers 1 und nach Aufforderung durch die Mikroprozessoreinheit 9 die oben erwähnte gespeicherte Zufallszahl über den I/O zum Datenträger 1. Die Aufforderung zur Sendung der Zufallszahl kann wiederum über die Steuerleitungen ST1 und ST2 geschehen, an die ein definiertes Signal angelegt wird, das der Aufforderung entspricht (z. B. eine logische 1 an der Steuerleitung ST1 und eine logische 0 an der Steuerleitung ST2).

In dem Datenträger 1 wird die gesendete Zufallszahl innerhalb des Zeitbereichs t₂ mit einer Kenn-Nr. KN logisch verknüpft und das Ergebnis der Verknüpfung wird von dem Datenträger 1 zusammen mit der Kenn-Nr. KN an das Sicherheitsmodul 11 der externen Einrichtung 5 zurückübermittelt.

In dem Sicherheitsmodul 11 wird die übermittelte Kenn-Nr. KN ebenfalls mit der Zufallszahl genau wie im Datenträger 1 logisch verknüpft und das Ergebnis der Verknüpfung wird mit dem von dem Datenträger übermittelten Ergebnis verglichen. Bei Gleichheit der Ergebnisse ist erwiesen, daß es sich um einen echten Datenträger 1 handelt. Eine entsprechende Information wird von dem Sicherheitsmodul 11 an die Mikroprozessoreinheit 9 übermittelt, die daraufhin mit der eigentlichen Kommunikation zwischen der externen Einrichtung 5 und dem Datenträger 1 beginnt.

Obwohl im Zusammenhang mit der Fig. 6 eine Prüfung eines Echtheitsmerkmals, wie es weitestgehend bereits im Zusammenhang mit Fig. 4 erläutert wurde, beschrieben wurde, können mit Hilfe des Sicherheitsmoduls 11 natürlich auch beliebig anders ausgestaltete Echtheitsprüfungen durchgeführt werden (siehe z. B. Fig. 3 und Fig. 5). Das Sicherheitsmodul 11 ist dann an das jeweilige Echtheitsmerkmal des Datenträgers 1 anzupassen.

Fig. 7 zeigt in einer schematischen Darstellung, wie das Sicherheitsmodul 11 beispielsweise aufgebaut sein kann. Genau wie in der Fig. 6 sind in der Fig. 7 ebenfalls nur die zum Verständnis notwendigen Verbindungsleitungen zwischen den einzelnen Komponenten gezeigt. In dem gezeigten Ausführungsbeispiel verfügt das Sicherheitsmodul 11 über eine Standardmikroprozessoreinheit 13, die als separater integrierter Schaltkreis ausgebildet ist. Darüber hinaus verfügt das Sicherheitsmodul 11 über einen weiteren integrierten Schaltkreis 15, der mit der Standardmikroprozessoreinheit 13 verbunden ist. Der integrierte Schaltkreis 15 weist einen möglichst einfachen Aufbau auf, damit er möglichst schnell und einfach angesteuert werden und die Prüfung des Echtheitsmerkmals des nicht gezeigten Datenträgers 1 möglichst schnell durchführen kann.

Vorzugsweise weist der integrierte Schaltkreis 15 eine fest verdrahtete Logik auf, die über die Steuerleitungen ST1 und ST2 von der Mikroprozessoreinheit 9 (vgl. auch Fig. 6) schnell und einfach gesteuert werden kann. So können beispielsweise folgende Steuersignale festgelegt werden:
- Steuerleitung ST1 logisch 0, Steuerleitung ST2 logisch 0 bedeutet: Echtheitsmerkmal soll nicht geprüft werden,
- Steuerleitung ST1 logisch 1, Steuerleitung ST2 logisch 1 bedeutet: Echtheitsmerkmal soll geprüft werden,
- Steuerleitung ST1 logisch 0, Steuerleitung ST2 logisch 1 bedeutet: eine im Sicherheitsmodul 11 generierte Zufallszahl soll zunächst in Registern des integrierten Schaltkreises 15 gespeichert werden (vgl. auch Fig. 6),
- Steuerleitung ST 1 logisch 1, Steuerleitung ST2 logisch 0 bedeutet: der o.g. Registerinhalt, also die Zufallszahl, soll zum Datenträger gesendet werden (vgl. auch Fig. 6).

Die beiden Steuerleitungen ST1 und ST2 erlauben also die komplette Steuerung des integrierten Schaltkreises 15 und damit die externe Steuerung des Sicherheitsmoduls 11.

Im folgenden wird auf die interne Kommunikation zwischen dem integrierten Schaltkreis 15 und der Standardmikroprozessoreinheit 13 eingegangen. Nachdem der integrierte Schaltkreis 15 von der Mikroprozessoreinheit 9 zur Prüfung des Echtheitsmerkmals des Datenträgers aufgefordert wurde, schaltet der integrierte Schaltkreis 15 gemäß der ISO-konformen Einschaltsequenz (ISO/IEC 7816-3) die Standardmikroprozessoreinheit 13 ein. Die Einschaltsequenz ist dem Fachmann bekannt und darüber hinaus bereits im Zusammenhang mit der Fig. 2 kurz erläutert, so daß hier nicht näher darauf eingegangen zu werden braucht.

Daraufhin generiert die Standardmikroprozessoreinheit 13 eine Zufallszahl, die an den integrierten Schaltkreis 15 übermittelt und dort in dem oben erwähnten Register gespeichert wird. Die gespeicherte Zufallszahl wird nach Aufforderung durch die Mikroprozessoreinheit 9 (siehe oben) an den Datenträger 1 gesendet und dort, wie es bereits im Zusammenhang mit Fig. 6 erläutert wurde, logisch verknüpft. Danach übermittelt der Datenträger 1 die zur Prüfung des Echtheitsmerkmals notwendigen Informationen an das Sicherheitsmodul 11, wie es ebenfalls bereits im Zusammenhang mit der Fig. 6 erläutert wurde. Die gesendeten Informationen werden in temporären Registern des integrierten Schaltkreises 15 gespeichert. Danach fordert der Standardmikroprozessor 13 die gespeicherten Informationen von integrierten Schaltkreis 15 an und überprüft die abgeleitete Zufallszahl (siehe oben).

Im Zusammenhang mit der Fig. 7 ist erläutert worden, daß das Sicherheitsmodul 11 zwei integrierte Schaltkreise aufweist, die die genannten Funktionen übernehmen. Selbstverständlich ist es auch möglich, die beiden integrierten Schaltkreise in einem integrierten Schaltkreis zusammenzufassen bzw. einen intergrierten Schaltkreis mit einer Mikroprozesoreinheit bereitzustellen, die wie üblich über bestimmte Befehle von der Mikroprozessoreinheit 9 angesteuert wird und das Echtheitsmerkmal selbständig prüft. Eine solche Ansteuerung über Mikroprozessorbefehle ist in der Regel jedoch zeitaufwendiger als die erwähnte Steuerung des integrierten Schaltkreises 15 über die Steuerleitungen ST1 und ST2.

Ein Ausführungsbeispiel, bei dem das Sicherheitsmodul 11 nur über einen integrierten Schaltkreis verfügt, ist in der Fig. 7a gezeigt. Der integrierte Schaltkreis weist eine Mikroprozessoreinheit auf, die so ausgebildet ist, daß sie die zur Prüfung des Echtheitsmerkmals notwendigen Funktionen ausführen kann. Die Kommunikation zwischen der Mikroprozessoreinheit 9, dem Sicherheitsmodul 11, der externen Einrichtung 5 und dem Datenträger 1 erfolgt weitestgehend genauso, wie es bereits im Zusammenhang mit Fig. 6 beschrieben wurde, so daß im folgenden nur auf die Unterschiede eingegangen wird.

Der integrierte Schaltkreis 15 wird über den I/O₁ von der Mikroprozessoreinheit 9 angesteuert, über den I/O₁ werden also diejenigen Mikroprozessorbefehle übermittelt, die zur Prüfung des Echtheitsmerkmals notwendig sind. Die entsprechenden Befehle sind bereits im Zusammenhang mit der Fig. 7 erläutert worden. In dem gezeigten Ausführungsbeispiel kann also auf die Steuerleitungen ST1 und ST2, wie sie in Fig. 6 gezeigt sind, verzichtet werden.

Auch die Daten, die vom integrierten Schaltkreis 15 des Sicherheitsmoduls 11 an den Datenträger 1 übermittelt werden, entsprechen den Daten, die in Fig. 6 übermittelt werden. Diese Daten können von der Schnittstelle I/O₂ des integrierten Schaltkreises 15, die bei handelsüblichen integrierten Schaltkreisen für Chipkarten immer vorhanden ist, zu der Schnittstelle I/O₁ des Datenträgers übermittelt werden. In diesem Fall sind die Übertragungswege der Befehle von der Mikroprozessoreinheit 9 zu dem integrierten Schaltkreis 15 und der Daten vom integrierten Schaltkreis 15 zum Datenträger 1 voneinander getrennt. Selbstverständlich ist es auch möglich, die Daten von der Schnittstelle I/O₁ des integrierten Schaltkreises 15 zu der Schnittstelle I/O₁ des Datenträgers 1 zu übertragen, wie es auch in Fig. 6 gezeigt ist.

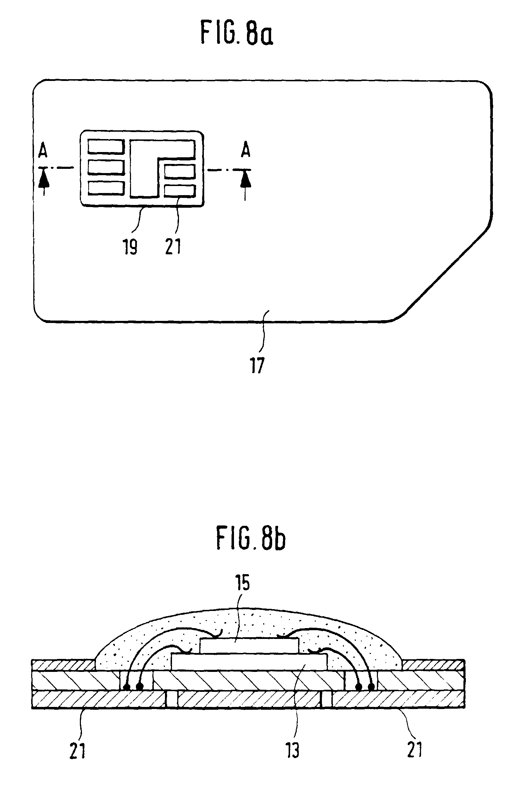

Fig. 8a zeigt stark vergrößert und nicht maßstabsgetreu eine Plug-In-Karte 17, in der das Sicherheitsmodul 11 als elektronisches Modul 19 untergebracht ist. Die Minichipkarte 17 wird in einen der oben erwähnten Steckplätze der externen Einrichtung 5 gesteckt, so daß mit Hilfe der Karte 17 nunmehr das Echtheitsmerkmal eines Datenträgers 1 (siehe Fig. 1) geprüft werden kann.

Fig. 8b zeigt ebenfalls stark vergrößert und nicht maßstabsgetreu einen Querschnitt durch das elektronische Modul entlang in der Fig. 8a gezeigten Linie AA. Der Aufbau solcher elektronischer Module ist dem Fachmann an sich bekannt (z. B. aus der EP 0 299 530 B1), so daß er hier nicht näher erläutert werden soll. Das elektronische Modul 9 enthält sowohl die Standardmikroprozessoreinheit 13 als auch den integrierten Schaltkreis 15, die beide mit den Kontaktflächen 21 leitend verbunden sind. Vorzugsweise sind die beiden integrierten Schaltkreise übereinanderliegend angeordnet, so wie es in der Fig. 8b gezeigt ist, selbstverständlich können sie aber auch nebeneinander liegen. Beide Schaltkreise können nach Anlegen der entsprechenden Spannungen und Signale über die Kontaktflächen 21 untereinander und mit der Mikroprozessoreinheit 9 kommiunizieren. Der Kommunikationsablauf zwischen den Komponenten ist bereits oben beschrieben worden.

Nachdem die Kommunikation zwischen der externen Einrichtung 5 und dem Datenträger 1 und die interne Kommunikation in der Externeinrichtung 5 erläutert worden ist, wird nun auf den Datenträger 1 an sich eingegangen.

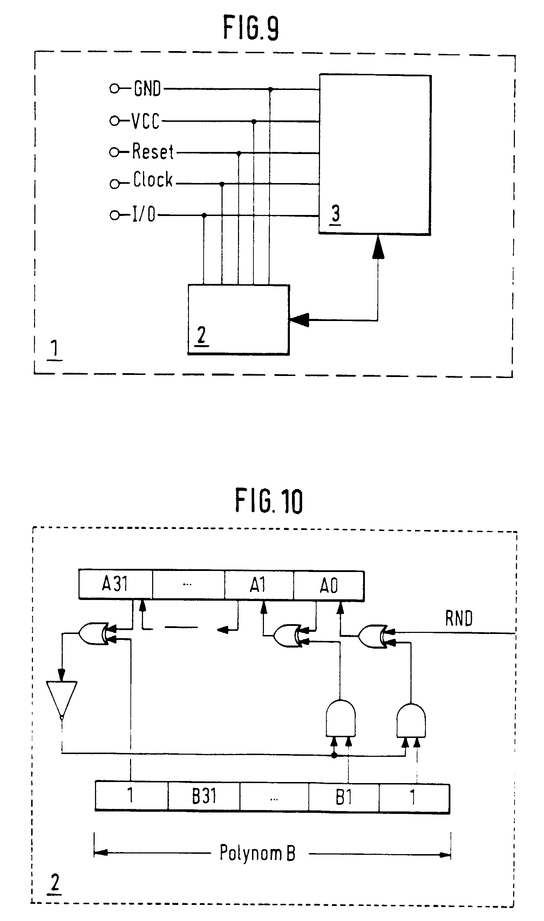

Der in Fig. 9 schematisch dargestellte Datenträger 1 unterscheidet sich von den herkömmlichen Datenträgern, z. B. mit einem Mikroprozessor, dadurch, daß zusätzlich zum üblichen Mikrokontroller 3 eine zusätzliche spezielle Schaltung 2 zum Senden bzw. Empfangen von Daten und einer eventuellen Verknüpfung der Daten mit einer in Hardware realisierten Kennung des Datenträgers, z. B. Serien-Nr., vorgesehen ist. Die Kennung des Datenträgers kann z. B. beim Herstellungsvorgang des integrierten Schaltkreises durch Zünden von Sicherungen als Hardware-Merkmal für die spezielle Schaltung des integrierten Schaltkreises realisiert werden. Die hardwaremäßige Realisierung einer solchen Kennung ist z. B. in der noch nicht veröffentlichten Patentanmeldung PCT/EP 93/03668 beschrieben. Ergänzend zu den in dieser Anmeldung beschriebenen Ausführungsformen kann die Kennung z. B. auch durch Setzen der Sicherungen mittels eines "Laser-Cutters" in der "Wafer-Fab" (Herstellung) erfolgen, wodurch die Sicherungen in einen definierten logischen Zustand irreversibel gesetzt werden.

Eine weitere Möglichkeit, die Kennung hardwaremäßig zu realisieren, besteht darin, bestimmte Bereiche des Siliziums des integrierten Schaltkreises als amorphe Silizium-Bereiche auszubilden und diese Bereiche als Sicherungen zu benutzen. Hierbei sind die amorphen Bereiche nichtleitend, können aber, indem man einen genügend hohen Strom durch diese Bereiche schickt, in kristalline leitende Silizium-Bereiche umgewandelt werden. Somit ist die nichtgezündete Sicherung nichtleitend und die gezündete Sicherung leitend. Ein besonderer Vorteil, die Sicherungen für die Kennung als amorphen Silizium-Bereich auszubilden, ist darin zu sehen, daß amorphes Silizium optisch von kristallinem Silizium nicht zu unterscheiden ist. Somit ist die Kennung des Datenträgers mit optischen Methoden nicht ausspähbar.

Der Mikrokontroller 3 des Datenträgers kann bei der gezeigten Konfiguration auch direkt auf die spezielle Schaltung 2 zugreifen, so kann z. B. der Mikrokontroller 3 das von der speziellen Schaltungslogik 2 errechnete Ergebnis der Verknüpfung dann auslesen, wenn das von der speziellen Schaltung 2 berechnete Ergebnis als ein Bestandteil des ATR-Signals, z. B. in den historical characters zur externen Einrichtung gesendet werden soll. Die spezielle Schaltung 2 kann jedoch auch ohne Mitwirkung des Mikrokontrollers 3 das Ergebnis der Verknüpfung direkt über die Datenleitung I/O an die externe Einrichtung innerhalb des Zeitbereichs von t₂ übertragen, da die spezielle Schaltung 2 direkt mit GND, VCC, Reset, Clock und der I/O-Datenleitung verbunden ist. Diese Hardware-Konfiguration des Datenträgers ermöglicht, daß das schnelle Senden bzw. Empfangen von Daten und eventuell die Verknüpfung der Daten mit einer Kennung des Datenträgers in dem genannten Zeitraum t₂ durchführbar ist. Statt der I/O-Leitung kann die spezielle Schaltung 2 auch mit einer der beiden, nicht dargestellten, RFU-Leitungen (reserve for future use) verschaltet werden. Der Einbau dieser speziellen Schaltung als Echtheitsmerkmal für einen Datenträger verhindert, daß das Echtheitsprüfverfahren durch herkömmliche Datenträger, z. B. mit Mikroprozessor, durch diesen oder durch eine externe Logikschaltung emuliert bzw. simuliert werden kann.

Fig. 10 zeigt die wesentlichen Bestandteile einer speziellen Schaltung 2 des Datenträgers, die z. B. in der Lage ist, eine Polynom-Modulo-Division der Zufallszahl mit der Kennung des Datenträgers als Teilerpolynom durchzuführen. Diese spezielle Schaltung 2 umfaßt z. B. 32 XOR, 32 AND, ein NEG-Gatter und ein Schieberegister A. Weiterhin befinden sich auf dem integrierten Schaltkreis des Datenträgers nicht dargestellte Sicherungen, die z. B. mittels eines "Laser-Cutters" in einen definierten logischen Zustand bei der Herstellung des "Wafers" gesetzt werden. Durch diese Sicherungen kann z. B. die Kennung als Hardware-Merkmal realisiert werden, wobei ein weiteres Register B die Kombination der logischen Zustände der gesetzten Sicherungen beinhaltet. Die von der externen Einrichtung gesendete Zufallszahl RND wird in das Schieberegister A geladen und mittels der Logikgatter wird eine Polynom-Modulo-Division der Bitpositionen der Zufallszahl im Register A mit dem Register B realisiert, welches durch die Kennung, z. B. Serien-Nr. des Datenträgers, bestimmt ist.

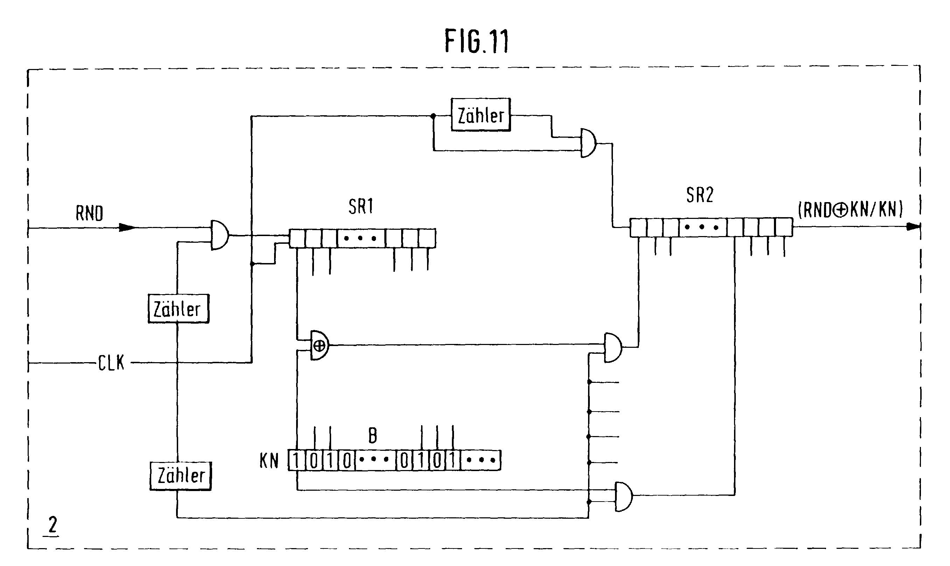

Fig. 11 zeigt ein weiteres Ausführungsbeispiel einer speziellen zusätzlichen Schaltung 2 eines Datenträgers. Bei dieser Ausführungsform wird die von der externen Einrichtung gesendete Zufallszahl RND an ein erstes Schieberegister SR1 übertragen, wobei die Kennung KN des Datenträgers in dem Register B enthalten ist. Die Kennung des Datenträgers kann z. B. aus zwei Teilen bestehen, wobei der zweite Teil eine Negierung der Bitfolgen des ersten Teils darstellt. Synchron zum Takt wird dann die Zufallszahl RND mit der Kennung, z. B. der Serien-Nr., Exklusiv Oder verknüpft. Wenn die Verknüpfung abgeschlossen ist, was mittels entsprechender Zähler festgestellt wird, wird dann das Ergebnis der Verknüpfung sowie die Kennung synchron zum Takt an das zweite Schieberegister weitergegeben und an die externe Einrichtung zurückgesendet. Dies erfolgt vorzugsweise innerhalb des Zeitbereiches von t₂.

Die obigen Ausführungen zeigen, daß die in der speziellen Schaltung 2 des Datenträgers 1 enthaltene Kennung wesentlich für die Echtheitsprüfung des Datenträgers ist. Handelt es sich beispielsweise um eine datenträgerindividuelle Kennung, so kann durch Veränderung der Kennung eine andere Individualität vorgetäuscht werden.

Aus diesem Grunde ist es besonders wichtig, daß die Kennung des Datenträgers 1 nicht ohne weiteres zu verfälschen ist.

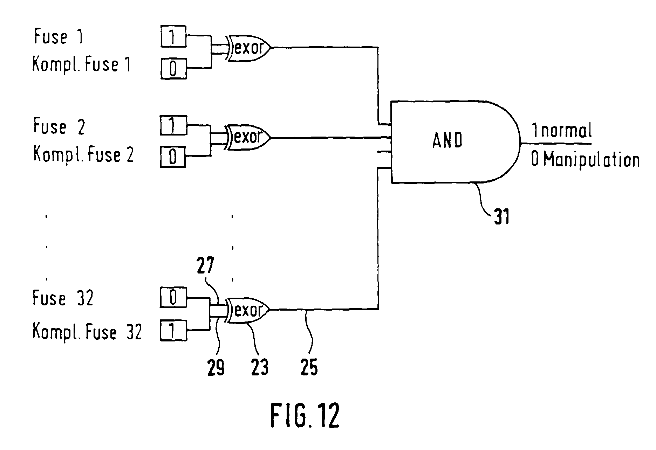

Wird die Kennung des Datenträgers beispielsweise als Hardware-Kennung durch das Zünden von Sicherungen realisiert (siehe auch Ausführungen zur Fig. 9), so kann die Kennung durch die Verwendung einer in Fig. 12 gezeigten Schaltung, die Bestandteil der speziellen Schaltung 2 ist (siehe Fig. 9), vor Verfälschung geschützt werden. In der Fig. 12 sind 32 Sicherungen (in der Fig. als Fuse bezeichnet) angedeutet, die entweder gezündet sind, wie z. B. die Sicherungen 1 und 2, bzw. nicht gezündet sind, wie z. B. die Sicherung 32. Hierbei ist einer gezündeten Sicherung eine logische 1 und einer nicht gezündeten Sicherung eine logische 0 zugeordnet. Die Sicherungen 1 - 32 repräsentieren die Kennung des Datenträgers. Jeder einzelnen Sicherung 1 - 32 ist eine komplementäre Sicherung (in der Fig. 12 als komplementäre Fuse bezeichnet) zugeordnet, die sich jeweils in dem komplementären Zustand zu der ihr zugeordneten Sicherung befindet (d. h. bei einer gezündeten Sicherung ist die komplementäre Sicherung nicht gezündet und umgekehrt). Dementsprechend ist die der Sicherung 1 zugeordnete komplementäre Sicherung 1 nicht gezündet, da die gezeigte Sicherung 1 selbst gezündet ist. Das gleiche gilt für die der Sicherung 2 zugeordnete komplementäre Sicherung 2. Im Gegensatz dazu ist in dem Beispiel gemäß Fig. 12 die komplementäre Sicherung 32 gezündet, da die gezeigte Sicherung 32 selbst nicht gezündet ist.

Durch die in der Fig. 12 gezeigten Exklusiv-ODER-Gatter 23 wird nunmehr überprüft, ob die einer Sicherung zugeordnete komplementäre Sicherung sich wirklich in dem komplementären Zustand befindet. Die Gatter 23 zeigen nämlich an ihrem Ausgang 25 nur dann eine logische 1 an, wenn die Eingänge 27 und 29 des Gatters komplementär gesetzt sind, wobei die Eingänge 27 und 29 den logischen Zuständen einer Sicherung und der ihr zugeordneten komplementären Sicherung entsprechen.

Schließlich wird durch das UND-Gatter 31 überprüft, ob an allen Ausgängen der Exklusiv-ODER-Gatter 23, die als Eingänge auf das UND-Gatter 31 geführt werden, eine logische 1 anliegt. In diesem Fall zeigt der Ausgang des UND-Gatters 31 eine logische 1 an, andernfalls eine logische 0. Genau dann, wenn das UND-Gatter 31 eine logische 1 anzeigt, ist somit sichergestellt, daß sich die jeder Sicherung zugeordnete komplementäre Sicherung in ihrem richtigen Zustand befindet. Die spezielle Schaltung 2 des Datenträgers ist so ausgelegt, daß die Kennung zur Echtheitsprüfung des Datenträgers nur verwendet werden kann, wenn sie unverfälscht ist, wenn also am Ausgang des UND-Gatters 31 eine logische 1 anliegt.

Soll die Kennung des Datenträgers 1 in betrügerischer Absicht verfälscht werden, so müssen dazu die Zustände der Sicherungen 1 - 32, die die Kennung festlegen, zumindest teilweise in einen anderen Zustand versetzt werden. Bei der in der Fig. 12 gezeigten Schaltung könnte z. B. zur Verfälschung der Kennung die Sicherung 32 gezündet werden, so daß ihr der Zustand logisch 1 zugeordnet wäre. In diesem Fall müßte allerdings die Zündung der komplementären Fuse 32 rückgängig gemacht werden, so daß ihr der Zustand logisch 0 zugeordnet ist, damit das der Sicherung 32 und der komplementären Sicherung 32 zugeordnete Exklusiv-ODER-Gatter 23 an seinem Ausgang 25 wieder eine logische 1 anzeigt. Gelingt es nicht, die Zündung der komplementären Sicherung 32 rückgängig zu machen, so zeigt das Exklusiv-ODER-Gatter 23 am Ausgang 25 und somit das UND-Gatter 31 an seinem Ausgang eine logische 0 und damit eine Manipulation der Kennung an.

Nun ist es aber möglich, Sicherungen so auszubilden, daß ein Rückgängigmachen der Zündung mit vertretbarem Aufwand nicht durchzuführen ist, so daß die Kennung der speziellen Schaltung 2 und somit des Datenträgers 1 sehr gut vor Verfälschungen, die in betrügerischer Absicht durchgeführt werden, geschützt ist.

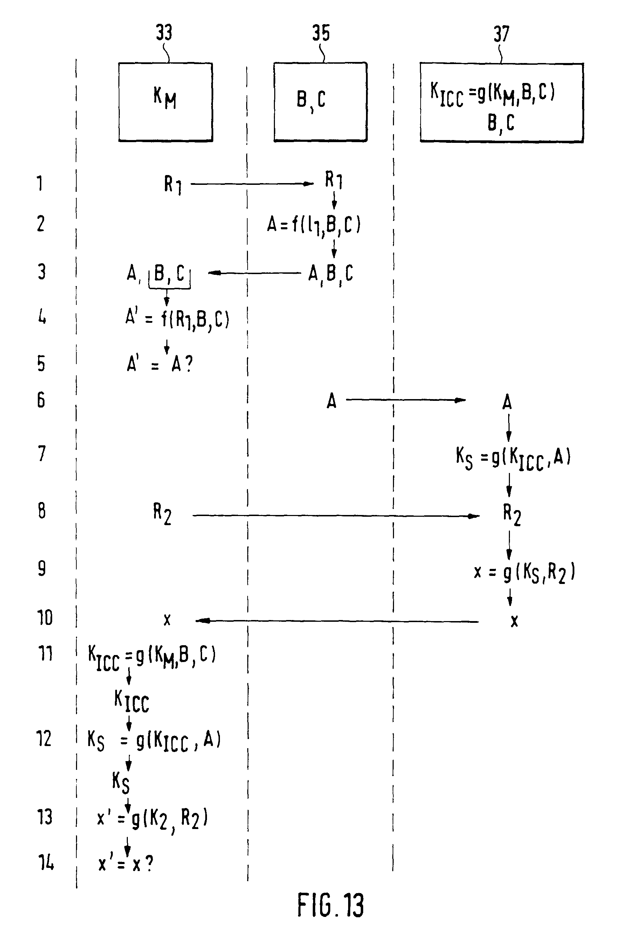

Die obigen Ausführungen beziehen sich vorwiegend auf die Prüfung des Echtheitsmerkmals des Datenträgers 1 durch die externe Einrichtung 5. Hierbei ist das Echtheitsmerkmal als separate festverdrahtete Schaltung auf dem integrierten Schaltkreis des Datenträgers ausgebildet. Kann das Echtheitsmerkmal durch die externe Einrichtung 5 positiv überprüft werden, so ist erwiesen, daß es sich bei dem Datenträger 1 um einen systemzugehörigen echten Datenträger handelt. Für die meisten Anwendungen von Datenträgern ist es darüber hinaus wichtig festzustellen, ob bestimmte Daten, die in dem integrierten Schaltkreis des Datenträgers enthalten sind, verfälscht worden sind. Auch eine solche Überprüfung der in der integrierten Schaltung des Datenträgers 1 enthaltenen Daten kann in besonders vorteilhafter Art und Weise mit dem in der speziellen Schaltung 2 enthaltenen Echtheitsmerkmal überprüft werden, wie beispielhaft in der Fig. 13 ausgeführt wird.

Die linke Spalte der Fig. 13 bezieht sich auf die externe Einrichtung 5 und enthält ein Feld 33, in dem diejenigen Größen enthalten sind, die zur Durchführung der nachfolgend beschrieben Rechenoperationen in der externen Einrichtung 5 gespeichert sind. Insbesondere ist dies der Masterkey K_{M}. Darüber hinaus enthält die linke Spalte der Fig. 13 sämtliche Rechenoperationen, die in der externen Einrichtung durchgeführt werden.

Die mittelere Spalte der Fig. 13 bezieht sich auf die spezielle Schaltung 2 des Datenträgers 1 (siehe auch Fig. 6) und das Feld 35 enthält diejenigen Größen, die in der speziellen Schaltung 2 zur Durchführung der nachfolgend erläuterten Rechenoperationen gespeichert sind. Insbesondere sind dies die Daten B und C, wobei es sich bei der Information B beispielsweise um eine Gruppen-Nr. und bei der Information C beispielsweise um eine Karten- Nr. oder um andere Kennungen des Datenträgers handeln kann. Darüber hinaus enthält die mittlere Spalte der Fig. 13 diejenigen Rechenoperationen, die von der speziellen Schaltung 2 durchgeführt werden.

Die rechte Spalte der Fig. 13 bezieht sich auf den Mikrokontroller 3 des Datenträgers 1 (siehe auch Fig. 6) und enthält in dem Feld 37 diejenigen Größen, die in dem Mikrokontroller 3 gespeichert sind, um die nachfolgend erläuterten Rechenoperationen im Mikrokontroller 3 durchzuführen. Insbesondere ist dies der dem Datenträger zugeordnete Schlüssel K_{ICC}, der eine Funktion des Masterkeys K_{M} und der Daten B und C ist. Der Schlüssel K_{ICC} kann bereits bei der Herstellung des Datenträgers 1 in dem Mikrokontroller 3 gespeichert werden.

Bei einer Kommunikation zwischen der externen Einrichtung 5 und dem Datenträger 1 wird zunächst das Echtheitsmerkmal des Datenträgers 1 wie bereits oben mehrfach erläutert überprüft. Dazu wird zunächst von der externen Einrichtung 5 an die spezielle Schaltung 2 eine in der externen Schaltung 5 generierte Zufallszahl R₁ übermittelt (siehe Schritt 1, die Schritte sind ganz links in der Fig. 13 angegeben). In der speziellen Schaltung wird die Zufallszahl R₁ mit den Daten B und C logisch zu dem Ergebnis A verknüpft (siehe Schritt 2). Die Daten A, B und C werden in Schritt 3 von der speziellen Schaltung 2 an die externe Einrichtung 5 übermittelt. Daraufhin werden in der externen Einrichtung 5 die übermittelten Daten B und C mit der dort gespeicherten Zufallszahl R₁ unter Verwendung zu dem Ergebnis A' logisch verknüpft (siehe Schritt 4). Im Schritt 5 wird diese Inforamtion A' mit der von der speziellen Schaltung 2 übermittelten Information A verglichen. Bei Übereinstimmung der beiden Informationen ist sichergestellt, daß es sich bei dem Datenträger 1 um einen echten systemzugehörigen Datenträger handelt, da das Echtheitsmerkmal durch die externe Enrichtung positiv überprüft werden konnte.

In Schritt 6 wird die in der speziellen Schaltung 2 berechnete Information A an den Mikrokontroller 3 des Datenträgers 1 (siehe auch Fig. 6) übermittelt. In dem Mikrokontroller 3 wird auf die Information A unter Verwendung des Schlüssels K_{ICC} die Funktion g angewendet und das Ergebnis ist der für diese spezielle Kommunikation gültige Schlüssel K_{S} (siehe Schritt 7; über die Information A fließt in den Schlüssel K_{S} die generierte Zufallszahl R₁ ein, so daß der Schlüssel K_{S} in der Tat von Kommunikation zu Kommunikation verschieden ist).

Daraufhin wird von der externen Einrichtung 5 eine dort generierte Zufallszahl R₂ an den Mikrokontroller 3 des Datenträgers 1 übermittelt (siehe Schritt 8). In dem Mikrokontroller 3 wird auf die Zufallszahl R₂ unter Anwendung des Schlüssels K_{S} die Funktion g angewendet, so daß das Ergebnis x entsteht (siehe Schritt 9). Das Ergebnis x wird von dem Mikrokontroller 3 an die externe Einrichtung 5 übermittelt (siehe Schritt 10).

In der externen Einrichtung wird mit Hilfe des in der Einrichtung 5 gespeicherten Masterkeys K_{M} aus den im Schritt 3 übermittelten Daten B und C der Datenträgerschlüssel K_{ICC} berechnet (siehe Schritt 11). Der berechnete Datenträgerschlüssel K_{ICC} kann nunmehr dazu verwendet werden, aus der Information A, die ebenfalls in Schritt 3 an die externe Einrichtung übermittelt worden ist, den aktuellen Schlüssel K_{S} zu berechnen (siehe Schritt 12). Schließlich kann aus der generierten Zufallszahl R₂ unter Verwendung des Schlüssels K_{S} die Information x' berechnet werden (siehe Schritt 13), die abschließend dort mit der von dem Mikrokontroller 3 übermittelten Information x verglichen wird (siehe Schritt 14).

Bei Gleichheit der beiden Informationen x' und x gilt für die externe Einrichtung 5 als erwiesen, daß die spezielle Schaltung 2 des Datenträgers 1 mit dem Mikrokontroller 3 des Datenträgers 1 kommunizieren kann, da der Mikrokontroller 3 des Datenträgers 1 die Information x nur dann richtig berechnen kann, wenn zuvor in Schritt 6 von der speziellen Schaltung 2 die richtige Information A an den Mikrokontroller 3 übermittelt worden ist. Es ist also nicht möglich, einen nicht echten und nicht systemzugehörigen Datenträger nachträglich mit einer speziellen Schaltung zu versehen, die mit dem Mikrokontroller des Datenträgers nicht in Verbindung steht.

Darüber hinaus gilt es für die externe Einrichtung 5 als erwiesen, daß die spezielle Schaltung 2 und der Mikrokontroller 3 des Datenträgers 1 zusammengehören, denn nur wenn die spezielle Schaltung 2 und der Mikrokontroller 3 zusammengehören, enthält der Mikrokontroller 3 die gleichen Daten B und C wie die spezielle Schaltung 2 und den dazugehörigen Datenträgerschlüssel K_{ICC}. Nur in diesem Fall kann in dem Mikrokontroller 3 die gleiche Information x berechnet werden, wie in der externen Einrichtung 5.

Wegen dieses Nachweises der Zusammengehörigkeit der speziellen Schaltung 2 und des Microcontollers 3 durch die externe Einrichtung 5 ist es also nicht möglich, in betrügerischer Absicht einen Datenträger, der an sich nicht echt und nicht systemzugehörig ist, mit einer speziellen Schaltung 2 nachträglich zu versehen und somit die Echtheit und Systemzugehörigkeit des Datenträgers 1 vorzutäuschen.

Darüber hinaus ist es nicht möglich, in betrügerischer Absicht die Daten B und C in dem Mikrokontroller 3 eines echten systemzugehörigen Datenträgers zu verfälschen. Einerseits müßte man dann nämlich auch den Datenträgerschlüssel K_{ICC} entsprechend anpassen, da dieser Schlüssel K_{ICC} jederzeit in der externen Einrichtung 5 aus den in dem Mikrokontroller 3 gespeicherten Daten B und C berechnet und mit dem gespeicherten Schlüssel K_{ICC} verglichen werden könnte. Eine solche Anpassung ist jedoch nicht möglich, da einem Betrüger der Masterkey K_{M} nicht vorliegt. Andererseits müßten auch die Daten B und C in der speziellen Schaltung 2 entsprechend geändert werden, da ansonsten in der externen Einrichtung 5 eine andere Information x berechnet würde als in dem Mikrokontroller 3. Die Daten B und C der speziellen Schaltung 2 können aber gut vor Verfälschung geschützt werden, wie es z. B. im Zusammenhang mit Fig. 12 beschrieben wurde.

Bei den Daten B und C kann es sich z. B. um eine Gruppen-Nr. und eine individuelle Chip-Nr. handeln, es kann sich aber auch um persönliche Daten des Karteninhabers, wie z. B. um den Namen und eine Konto-Nr. etc., handeln. Selbstverständlich sind die oben erläuterten Prüfroutinen auch durchführbar, wenn man z. B. nur die Daten B bzw. über die Daten B und C hinaus weitere Daten verwendet.

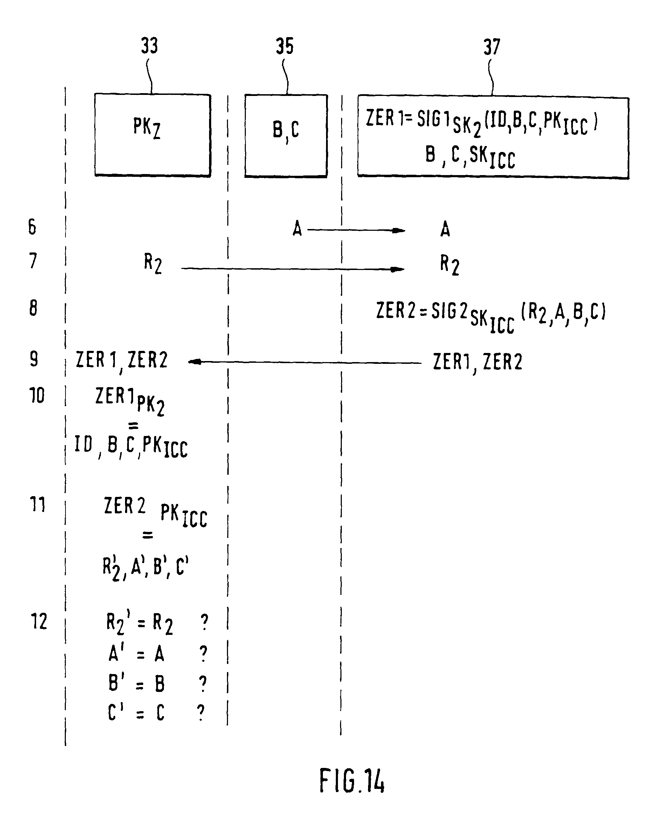

Fig. 14 zeigt, wie man die Zusammengehörigkeit des speziellen Schaltkreises 2 mit dem Mikrokontroller 3 des Datenträgers 1 unter der Verwendung eines asymmetrischen Verschlüsselungsalgorithmus zeigen kann. Die Fig. 14 ist schematisch genauso aufgebaut wie die Fig. 13, d. h. in den Feldern 33, 35 und 37 sind jeweils diejenigen Informationen angegeben, die in den entsprechenden Komponenten gespeichert sind. Darüber hinaus wird die Prüfung des Echtheitsmerkmals des Datenträgers 1 durch die externe Einrichtung 5 genauso vorgenommen, wie dies im Zusammenhang mit den Schritten 1 - 5 der Fig. 13 bereits erläutert worden ist. Dementsprechend soll an dieser Stelle noch nicht einmal darauf eingegangen werden.

Nach der Prüfung des Echtheitsmerkmals des Datenträgers 1 wird von der speziellen Schaltung 2 die Information A (vgl. auch Fig. 6) und in Schritt 7 die in der externen Einrichtung 5 generierte Zufallszahl R₂ an den Mikrokontroller 3 des Datenträgers 1 übermittelt. In Schritt 8 wird in dem Mikrokontroller 3 aus der Zufallszahl R₂ und den Daten A, B und C unter Verwendung des Geheimschlüssels des Datenträgers 1 SK_{ICC} das Zertifikat ZER2 gebildet. Das Zertifikt ZER2 wird zusammen mit dem in dem Mikrokontroller 3 gespeicherten Zertifikat ZER1 an die externe Einrichtung 5 übertragen (siehe Schritt 9). Unter Anwendung des öffentlichen Schlüssels PK_{Z} der Institution Z werden aus dem Zertifikat ZER1 die Identität ID, die Daten B und C und der öffentliche Schlüssel des Datenträgers PK_{ICC} berechnet (siehe Schritt 10). Danach wird unter Verwendung des soeben gewonnenen öffentlichen Schlüssels PK_{ICC} des Datenträgers aus dem Zertifikat ZER2 die Zufallszahl R2' und die Informationen A', B' und C' berechnet (siehe Schritt 11). Schließlich wird in dem Schritt 12 die soeben gewonnene Zufallszahl R2' mit der in der externen Einrichtung generierten Zufallszahl R2 und die soeben gewonnenen Daten A, B und C mit den in Schritt 3 übermittelten Daten A, B und C (siehe auch Fig. 13) verglichen.

Bei positivem Vergleich gilt als erwiesen, daß die spezielle Schaltung 2 dazu in der Lage ist, mit dem Mikrokontroller 3 zu kommunizieren (siehe Schritt 6) und es gilt ferner als erwiesen, daß die spezielle Schaltung 2 und der Mikrokontroller 3 zusammengehören. Andernfalls würden nämlich die in Schritt 12 verglichenen Informationen nicht übereinstimmen, da dann in der speziellen Schaltung 2 andere Daten B und C gespeichert wären als in dem Mikrokontroller 3 des Datenträgers 1.

Ferner gilt als erwiesen, daß die in dem Mikrokontroller gespeicherten Daten B und C nicht verfälscht worden sind, da diese Informationen ansonsten nicht mehr mit den in dem Zertifikat ZER1 gespeicherten Daten B und C übereinstimmen würden. Diese Daten werden aber in Schritt 12 auf Übereinstimmung geprüft, so daß eine Fälschung auffiele. Darüber hinaus würden diese Daten auch nicht mehr mit den in der speziellen Schaltung 2 gespeicherten Daten B und C übereinstimmen, was ebenfalls in Schritt 12 geprüft wird. Auch bei der Verwendung eines asymmetrischen Verschlüsselungsverfahren sind also die Informationen B und C sehr gut gegen Verfälschung geschützt.

Diejenigen Operationen, die im Zusammenhang mit den Fig. 13 und 14 erwähnt worden sind und in der externen Einrichtung 5 durchgeführt werden, können vorzugsweise von einem Sicherheitsmodul 11 durchgeführt werden, wie es im Zusammenhang mit den Fig. 6 - 8 beschrieben worden ist.

## Patentansprüche

1. Verfahren zur Echtheitsprüfung eines Datenträgers, der wenigstens einen integrierten Schaltkreis mit Speichereinheiten und Logikeinheiten aufweist und über eine Datenleitung mit einer externen Einrichtung Daten austauscht, wobei der Datenträger von der externen Einrichtung die zum Betrieb notwendigen Betriebs- und Steuersignale erhält, dadurch **gekennzeichnet,** daß der integrierte Schaltkreis zusätzlich eine separate, festverdrahtete Schaltung zum Senden und/oder Empfangen von Daten während einer gemäß einem Protokoll definierten Einschaltsequenz aufweist, die zur Echtheitsprüfung verwendet wird, wobei das erste Senden bzw. Empfangen der zur Echtheitsprüfung verwendeten Daten innerhalb eines definierten Zeitbereichs der Einschaltsequenz abgeschlossen ist, in der die Datenleitung keinen durch das Protokoll definierten Zustand aufweist.

2. Verfahren nach Anspruch 1, dadurch **gekennzeichnet,** daß die Einschaltsequenz nach dem standardisierten Protokoll ISO/IEC 7816-3 erfolgt, wobei das erste Senden bzw. Empfangen der Daten innerhalb des durch das Protokoll definierten Zeitbereichs t₂ abgeschlossen ist.

3. Verfahren nach Anspruch 2, dadurch **gekennzeichnet,** daß die Daten von der externen Einrichtung innerhalb des Zeitbereichs t₂ gesendet und von dem Datenträger empfangen werden, und das Zurücksenden der empfangenen Daten durch den Datenträger ebenfalls innerhalb von t₂ und/oder in dem vom Protokoll definierten Answer-To-Reset-Signal des Datenträgers zur externen Einrichtung erfolgt.

4. Verfahren nach Anspruch 3, dadurch **gekennzeichnet,** daß die von der externen Einrichtung empfangenen Daten von dem Datenträger mit einer Kennung des Datenträgers verknüpft werden und das Ergebnis der Verknüpfung innerhalb des Zeitbereichs t₂ oder im Answer-To-Reset-Signal an die externe Einrichtung zurückgesendet wird.

5. Verfahren nach Anspruch 4, dadurch **gekennzeichnet,** daß das Ergebnis der Verknüpfung mit der Kennung des Datenträgers von diesem an die externe Einrichtung zur Echtheitsprüfung übertragen wird.

6. Verfahren nach Anspruch 4, dadurch **gekennzeichnet,** daß die von der externen Einrichtung gesendeten Daten eine von dieser generierte Zufallszahl darstellen, die mittels einer Exklusiv-Oder-Operation mit der Kennung des Datenträgers von diesem verknüpft wird oder eine Polynom-Modulo-Division der Zufallszahl mit der Kennung als Teilerpolynom durch den Datenträger erfolgt.

7. Verfahren nach Anspruch 3, dadurch **gekennzeichnet,** daß die von der externen Einrichtung empfangenen Daten von der speziellen Schaltung des Datenträgers mit einer Kennung des Datenträgers verknüpft werden und das Ergebnis der Verknüpfung (A) innerhalb des Zeitbereichs t₂ oder im Answer-To-Reset-Signal an die externe Einrichtung zurückgesendet wird und daß das Ergebnis der Verknüpfung (A) zusätzlich an die Logikeinheiten des integrierten Schaltkreises des Datenträgers übermittelt wird.

8. Verfahren nach Anspruch 7, dadurch **gekennzeichnet,** daß das an die Logikeinheit übermittelte Ergebnis der logischen Verknüpfung (A) von der Logikeinheit an die externe Einrichtung übermittelt wird und in der externen Einrichtung mit dem von der speziellen Schaltung an die externe Einrichtung übermittelten Ergebnis (A) auf eine vorbestimmte Beziehung geprüft wird.

9. Verfahren nach Anspruch 9, dadurch **gekennzeichnet,** daß
- das Ergebnis der logischen Verknüpfung (A) in der Logikeinheit des Datenträgers mit weiteren Daten zu einem Ergebnis (x) logisch verknüpft wird und
- daß das Ergebnis der logischen Verknüpfung (x) an die externe Einrichtung übermittelt wird und
- das in der externen Einrichtung das von der speziellen Schaltung erhaltene Ergebnis (A) mit weiteren Daten zu einem Ergebnis (x') logisch verknüpft wird und daß
- in der externen Einrichtung die Ergebnisse (x) und (x') auf eine vorbestimmte Beziehung geprüft werden, wobei als erwiesen gilt, daß das Ergebnis (A) richtig von der speziellen Schaltung an die Logikeinheiten des Datenträgers übermittelt und dort richtig logisch verknüpft wurde, wenn die vorbestimmte Beziehung positiv überprüft werden kann.

10. Verfahren nach Anspruch 9, dadurch **gekennzeichnet,** daß
- von der externen Einrichtung an die Logikeinheit des Datenträgers Daten übermittelt werden, die dort mit dem Ergebnis (A) zu dem Ergebnis (x) logisch verknüpft werden und daß
- in der externen Einrichtung die gleiche logische Verknüpfung durchgeführt wird wie in der Logikeinheit des Datenträgers, die zu dem Ergebnis (x') führt und daß
- in der externen Einrichtung die Ergebnisse (x) und (x') auf Gleichheit geprüft werden.

11. Verfahren nach einem der Ansprüche 8 - 9, dadurch **gekennzeichnet,** daß
- das Ergebnis (A) in der Logikeinheit des Datenträgers mit in den Speichereinheiten des Datenträgers gespeicherten Daten zu dem Ergebnis (x) logisch verknüpft werden und
- daß von der speziellen Schaltung des Datenträgers Daten an die externe Einrichtung übermittelt werden und daß
- in der externen Einrichtung das Ergebnis (A) mit den zusätzlich von der speziellen Schaltung übermittelten Daten zu dem Ergebnis (x') verknüpft werden und daß
- in der externen Einrichtung das von der Logikeinheit übermittelte Ergebnis (x) mit dem dort berechneten Ergebnis (x') auf eine vorbestimmte Beziehung überprüft wird, wobei als erwiesen gilt, daß die in den Speichereinheiten des Datenträgers gespeicherten Daten eine vorbestimmte Beziehung zu den in der speziellen Schaltung gespeicherten Daten erfüllen, wenn die vorbestimmte Beziehung positiv überprüft werden kann.

12. Verfahren nach Anspruch 2, dadurch **gekennzeichnet,** daß der Datenträger innerhalb des Zeitbereichs t₂ an die externe Einrichtung eine Kennung des Datenträgers sendet, die anschließend von der externen Einrichtung zur Echtheitsprüfung des Datenträgers ausgewertet wird.

13. Verfahren nach Anspruch 12, dadurch **gekennzeichnet,** daß die Kennung des Datenträgers vor dem Senden an die externe Einrichtung vom Datenträger mit einer vom Datenträger generierten Zufallszahl verknüpft wird und das Ergebnis dieser Verknüpfung an die externe Einrichtung zur Echtheitsprüfung des Datenträgers übertragen wird.

14. Verfahren nach einem der Ansprüche 1 - 13, dadurch **gekennzeichnet,** daß das Senden der zur Echtheitsprüfung verwendeten Daten synchron mit einem von der externen Einrichtung an den Datenträger übermittelten Taktsignal erfolgt.

15. Verfahren nach Anspruch 14, dadurch **gekennzeichnet,** daß die Datenübertragung bei der Echtheitsprüfung synchron mit einem Vielfachen der externen Taktfrequenz erfolgt.

16. Datenträgeranordnung zur Durchführung eines Verfahrens nach Anspruch 1 mit einem Datenträger, der wenigstens einen integrierten Schaltkreis mit Speichereinheiten und Logikeinheiten aufweist und über eine Datenleitung mit einer externen Einrichtung Daten austauscht, wobei der Datenträger durch die externe Einrichtung die zum Betrieb des Datenträgers notwendigen Betriebs- und Steuersignale erhält und die externe Einrichtung zumindest auf Teilbereiche der Speichereinheiten des Datenträgers zum Lesen und/oder Schreiben Zugriff hat, dadurch **gekennzeichnet**, daß der integrierte Schaltkreis zusätzlich eine separate festverdrahtete Schaltung zum Senden und/oder Empfangen von Daten während einer gemäß einem Protokoll definierten Einschaltsequenz aufweist, die zur Echtheitsprüfung verwendet wird, wobei die separate Schaltung das erste Senden bzw. Empfangen der zur Echtheitsprüfung verwendeten Daten unabhängig von den Logikeinheiten und Speichereinheiten des Datenträgers innerhalb eines definierten Zeitbereichs der Einschaltsequenz durchführt, in der die Datenleitung keinen durch das Protokoll definierten Zustand aufweist.

17. Datenträgeranordnung nach Anspruch 16, dadurch **gekennzeichnet,** daß die separate Schaltung eine in Hardware realisierte Kennung für den Datenträger aufweist.

18. Datenträgeranordnung nach Anspruch 17, dadurch **gekennzeichnet,** daß die Kennung für den Datenträger durch Sicherungen realisiert ist, wobei zumindest ein Teil der Sicherungen gezündet ist und wobei jeder einzelnen Sicherung der Kennung eine komplementäre Sicherung zugeordnet ist, die sich im jeweils komplementären Zustand zu der ihr zugeordneten Sicherung befindet.

19. Datenträgeranordnung nach Anspruch 18, dadurch **gekennzeichnet,** daß die spezielle separate Schaltung eine Schaltung zur Prüfung aufweist, ob sich die einer jeden Sicherung zugeordnete komplementäre Sicherung im richtigen Zustand befindet und daß die Kennung des Datenträgers nur dann auslesbar ist, wenn sich sämtliche Sicherungen und die ihnen zugeordneten Sicherungen im richtigen Zustand befinden.

20. Datenträgeranordnung nach einem der Ansprüche 17 - 19, dadurch **gekennzeichnet**, daß die separate Schaltung des Datenträgers innerhalb des durch das Protokoll ISO/IEC 7816-3 definierten Zeitbereichs t₂ die Kennung des Datenträgers an die externe Einrichtung überträgt.

21. Datenträgeranordnung nach Anspruch 17, dadurch **gekennzeichnet,** daß die separate Schaltung des Datenträgers eine Zufallszahl generiert und diese mit der Kennung des Datenträgers verknüpft.

22. Datenträgeranordnung nach Anspruch 17, dadurch **gekennzeichnet,** daß die separate Schaltung des Datenträgers eine von der externen Einrichtung empfangene Zufallszahl mit der Kennung des Datenträgers verknüpft.

23. Datenträgeranordnung nach Anspruch 16, dadurch **gekennzeichnet,** daß die externe Einrichtung eine Mikroprozessoreinheit und ein Sicherheitsmodul aufweist, wobei das Sicherheitsmodul von der Mikroprozessoreinheit ansteuerbar ist und daß mit dem Sicherheitsmodul ein Verfahren gemäß der Ansprüche 1 - 15 zur Echtheitsprüfung des Datenträgers durchführbar ist.

24. Datenträgeranordnung nach Anspruch 23, dadurch **gekennzeichnet,** daß das Sicherheitsmodul direkt mit der speziellen Schaltung des Datenträgers verbunden ist und daß direkt und bidirektional Daten zwischen dem Sicherheitsmodul und der speziellen Schaltung austauschbar sind.

25. Datenträgeranordnung nach einem der Ansprüche 22 - 24, dadurch **gekennzeichnet,** daß das Sicherheitsmodul direkt mit den Logikeinheiten des Datenträgers verbunden ist und daß direkt und bidirektionale Daten zwischen dem Sicherheitsmodul und den Logikeinheiten austauschbar sind.

26. Datenträgeranordnung nach einem der Ansprüche 22 - 25, dadurch **gekennzeichnet,** daß das Sicherheitsmodul eine Chipkarte ist, die in einen Steckplatz der externen Einrichtung steckbar ist.

## Claims

1. A method for testing the authenticity of a data carrier having at least an integrated circuit with memory units and logic units and exchanging data with an external device via a data line, the data carrier receiving the operating and control signals necessary for operation from the external device, characterized in that the integrated circuit additionally has a separate, hard-wired circuit for transmitting and/ or receiving data during a power-up sequence defined according to a protocol, which is used for authenticity testing, the first transmission or reception of data used for authenticity testing being completed within a defined time domain of the power-up sequence in which the data line has no state defined by the protocol.

2. The method of claim 1, characterized in that the power-up sequence takes place according to the standardized protocol ISO/IEC 7816-3, the first transmission or reception of data being completed within time domain t₂ defined by the protocol.

3. The method of claim 2, characterized in that the data are transmitted by the external device and received by the data carrier within time domain t₂, and the received data are likewise transmitted back to the external device by the data carrier within t₂ and/or in the answer-to-reset signal of the data carrier defined by the protocol.

4. The method of claim 3, characterized in that the data received from the external device are combined by the data carrier with an identification of the data carrier, and the result of combination is transmitted back to the external device within time domain t₂ or in the answer-to-reset signal.

5. The method of claim 4, characterized in that the result of combination with the identification of the data carrier is transmitted by the latter to the external device for authenticity testing.

6. The method of claim 4, characterized in that the data transmitted by the external device constitute a random number generated by the latter which is combined by an exclusive-OR operation with the identification of the data carrier by the latter, or a polynomial modulo division of the random number with the identification as the divisor polynomial is performed by the data carrier.

7. The method of claim 3, characterized in that the data received from the external device are combined with a data carrier identification by the special circuit of the data carrier, the result of combination (A) is transmitted back to the external device within time domain t₂ or in the answer-to-reset signal, and the result of combination (A) is transmitted additionally to the logic units of the integrated circuit of the data carrier.

8. The method of claim 7, characterized in that the result of logical combination (A) transmitted to the logic unit is transmitted by the logic unit to the external device and tested in the external device for a predetermined relation with the result (A) transmitted by the special circuit to the external device.

9. The method of claim , characterized in that
the result of logical combination (A) is logically combined with further data in the logic unit of the data carrier to form a result (x), and
the result of logical combination (x) is transmitted to the external device, and
the result (A) obtained from the special circuit is logically combined with further data in the external device to form a result (x'), and
the results (x) and (x') are tested in the external device for a predetermined relation, it being considered proven that the result (A) was transmitted by the special circuit to the logic units of the data carrier correctly and logically combined there correctly if the predetermined relation can be checked positively.

10. The method of claim 9, characterized in that
the external device transmits data to the logic unit of the data carrier which are logically combined with the result (A) there to form the result (x), and
the same logical combination is performed in the external device as in the logic unit of the data carrier which leads to the result (x'), and
the results (x) and (x') are tested for a match in the external device.

11. The method of one of claims 8 to 9, characterized in that
the result (A) is logically combined in the logic unit of the data carrier with data stored in the memory units of the data carrier to form the result (x), and
the special circuit of the data carrier transmits data to the external device, and
the result (A) is combined in the external device with the data transmitted additionally by the special circuit to form the result (x'), and
the result (x) transmitted by the logic unit is checked in the external device for a predetermined relation with the result (x') calculated there, it being considered proven that the data stored in the data carrier memory units fulfill a predetermined relation to the data stored in the special circuit if the predetermined relation can be checked positively.

12. The method of claim 2, characterized in that the data carrier transmits to the external device within the time domain t₂ an identification of the data carrier which is then evaluated by the external device for testing the authenticity of the data carrier.

13. The method of claim 12, characterized in that the data carrier identification is combined by the data carrier with a random number generated by the data carrier before being transmitted to the external device, and the result of this combination is transmitted to the external device for testing the authenticity of the data carrier.

14. The method of one of claims 1 to 13, characterized in that the data used for authenticity testing are transmitted in synchronism with a clock signal transmitted by the external device to the data carrier.

15. The method of claim 14, characterized in that the data transmission upon authenticity testing takes place in synchronism with a multiple of the external clocking rate.

16. A data carrier assembly for carrying out the method of claim 1 with a data carrier having at least an integrated circuit with memory units and logic units and exchanging data with an external device via a data line, the data carrier receiving the operating and control signals necessary for operation of the data carrier from the external device and the external device having access for reading and/or writing at least to partial areas of the memory units of the data carrier, characterized in that the integrated circuit additionally has a separate hard-wired circuit for transmitting and/ or receiving data during a power-up sequence defined according to a protocol, which is used for authenticity testing, the separate circuit performing the first transmission or reception of data used for authenticity testing independently of the logic units and memory units of the data carrier within a defined time domain of the power-up sequence in which the data line has no state defined by the protocol.

17. The data carrier assembly of claim 16, characterized in that the separate circuit has an identification for the data carrier realized in hardware.

18. The data carrier assembly of claim 17, characterized in that the identification for the data carrier is realized by fuses, at least some of the fuses being fired and each individual fuse of the identification having associated therewith a complementary fuse which is in the complementary state to the fuse associated therewith.

19. The data carrier assembly of claim 18, characterized in that the special separate circuit has a circuit for testing whether the complementary fuse associated with each fuse is in the proper state, and the data carrier identification is only readable if all fuses and the fuses associated therewith are in the proper state.

20. The data carrier assembly of any of claims 17 to 19, characterized in that the separate circuit of the data carrier transmits the data carrier identification to the external device within the time domain t₂ defined by the protocol ISO/IEC 7816-3.

21. The data carrier assembly of claim 17, characterized in that the separate circuit of the data carrier generates a random number and combines it with the data carrier identification.

22. The data carrier assembly of claim 17, characterized in that the separate circuit of the data carrier combines a random number received from the external device with the data carrier identification.

23. The data carrier assembly of claim 16, characterized in that the external device has a microprocessor unit and a safety module, the safety module being drivable by the microprocessor unit, and the method of claims 1 to 15 for testing the authenticity of the data carrier is to be carried out with the safety module.

24. The data carrier assembly of claim 23, characterized in that the safety module is connected directly with the special circuit of the data carrier, and data are interchangeable between the safety module and the special circuit directly and bidirectionally.

25. The data carrier assembly of any of claims 22 to 24, characterized in that the safety module is connected directly with the logic units of the data carrier, and data are interchangeable between the safety module and the logic units directly and bidirectionally.

26. The data carrier assembly of any of claims 22 to 25, characterized in that the safety module is a chip card to be plugged in an outlet in the external device.

## Revendications

1. Procédé de vérification de l'authenticité d'un support de données, qui comporte au moins un circuit intégré avec des unités de mémorisation et des unités logiques et qui, par une ligne de données, échange des données avec un dispositif extérieur, le support de données recevant du dispositif extérieur les signaux de fonctionnement et de commande nécessaires pour le fonctionnement, caractérisé en ce que le circuit intégré comporte de façon supplémentaire un circuit séparé, réalisé en montage fixe ou câblé, pour l'émission et/ou la réception de données, pendant une séquence de connexion définie selon un protocole, et qui est utilisé pour la vérification de l'authenticité, la première émission ou réception des données utilisées pour la vérification de l'authenticité étant réalisée complètement dans un intervalle de temps défini de la séquence de connexion, dans laquelle la ligne de données ne présente aucun état défini par le protocole.

2. Procédé selon la revendication 1, caractérisé en ce que la séquence de connexion est réalisée selon le protocole standardisé ISO/IEC 7816-3, la première émission ou réception de données étant réalisée complètement à l'intérieur de l'intervalle de temps défini par le protocole.

3. Procédé selon la revendication 2, caractérisé en ce que les données sont émises à l'intérieur du dispositif extérieur et sont reçues par le support de données à l'intérieur de l'intervalle de temps t₂, et la réémission des données reçues par le support de données se produit également à l'intérieur de t₂ et/ou à l'intérieur du signal réponse-pour-retour-à-l'état initial, défini par le protocole, du support de données vers le dispositif extérieur.

4. Procédé selon la revendication 3, caractérisé en ce que les données du support de données reçues du dispositif extérieur, sont combinées à une caractéristique d'identification du support de données, et le résultat de la combinaison est adressé en retour au dispositif extérieur, pendant la période de temps t₂ ou dans le signal réponse-pour-retour-à-l'état initial.

5. Procédé selon la revendication 4, caractérisé en ce que le résultat de la combinaison avec la caractéristique du support de données est transmis du support de données au dispositif extérieur pour la vérification de l'authenticité.

6. Procédé selon la revendication 4, caractérisé en ce que les données adressées par le dispositif extérieur présentent un nombre aléatoire généré par le dispositif extérieur et qui est combiné, à l'aide d'une opération OU exclusif par le support de données, avec la caractéristique du support de données ou bien qui réalise, via le support de données, une division modulo-polynôme du nombre aléatoire, avec la caractéristique servant de polynôme de division.

7. Procédé selon la revendication 3, caractérisé en ce que les données reçues du dispositif extérieur sont combinées par le circuit spécial du support de données avec une caractéristique du support de données et le résultat de la combinaison (A) est réémis vers le dispositif extérieur à l'intérieur de l'intervalle de temps t₂ ou dans le signal réponse-pour-retour-à-l'état initial, et en ce que le résultat de la combinaison (A) est retransmis de façon supplémentaire aux unités logiques du circuit intégré du support de données.

8. Procédé selon la revendication 7, caractérisé en ce que le résultat de la combinaison logique (A) de l'unité logique transmis à l'unité logique, est retransmis au dispositif extérieur, et dans ce dispositif extérieur. le résultat (A) retransmis au dispositif extérieur avec celui du circuit spécial, est vérifié en rapport à une relation prédéterminée.

9. Procédé selon la revendication 8. caractérisé en ce que
- le résultat de la combinaison logique (A) dans l'unité logique du support de données est combiné de façon logique avec d'autres données pour donner un résultat (x), et
- le résultat (x) de la combinaison logique, est transmis au dispositif extérieur, et
- le résultat (A) dans le dispositif extérieur est combiné de façon logique avec d'autres données à celui obtenu du circuit spécial pour donner un résultat (x'), et en ce que
- dans le dispositif extérieur, les résultats (x) et (x') sont vérifiés en rapport à une relation prédéterminée, et il s'avère comme prouvé, que le résultat (A) a été transmis exactement du circuit spécial aux unités logiques du support de données, et y a été combiné exactement de façon logique. lorsqu'on peut vérifier positivement la relation prédéterminée.

10. Procédé selon la revendication 9, caractérisé en ce que
- du dispositif extérieur à l'unité logique du support de données, sont transmises des données, qui sont combinées localement de façon logique avec le résultat (A) pour donner le résultat (x), et en ce que
- dans le dispositif extérieur, on réalise la même combinaison logique que dans l'unité logique du support de données, qui conduit au résultat (x'), et en ce que
- dans le dispositif extérieur, on vérifie l'égalité des résultats (x) et (x').

11. Procédé selon l'une des revendications 8 à 9, caractérisé en ce que
- on combine de façon logique le résultat (A) dans l'unité logique du support de données avec les données mémorisées dans les unités de mémorisation du support de données, pour obtenir le résultat (x) et
- on transmet les données du circuit spécial du support de données au dispositif extérieur, et en ce que
- on combine dans le dispositif extérieur le résultat (A) avec les données transmises de façon supplémentaire du circuit spécial, pour obtenir un résultat (x'), et en ce que
- dans le dispositif extérieur, on vérifie le résultat (x) transmis d'une unité logique avec le résultat (x') calculé localement, en rapport avec une relation prédéterminée. et il s'avère comme prouvé, que les données mémorisées dans les unités de mémorisation du support de données satisfont à une relation prédéterminée par rapport aux données mémorisées dans le circuit spécial, lorsqu'on peut vérifier positivement la relation prédéterminée.

12. Procédé selon la revendication 2, caractérisé en ce que le support de données émet dans l'intervalle de temps t₂ vers le dispositif extérieur, une caractéristique du support de données qui est ensuite évaluée par le dispositif extérieur pour la vérification d'authenticité du support de données.

13. Procédé selon la revendication 12, caractérisé en ce que la caractéristique du support de données est combinée avant l'envoi au dispositif extérieur du support de données, à un nombre aléatoire généré par le support de données, et en ce que le résultat de cette combinaison est transmis au dispositif extérieur pour la vérification d'authenticité du support de données.

14. Procédé selon l'une des revendications 1 à 13, caractérisé en ce que l'envoi des données utilisées pour la vérification de l'authenticité, est réalisé en synchronisme avec un signal de synchronisation transmis par le dispositif extérieur au support de données.

15. Procédé selon la revendication 14, caractérisé en ce que la transmission des données, au cours de la vérification d'authenticité, est réalisé en synchronisme avec un multiple de la fréquence de synchronisme extérieure.

16. Agencement de support de données pour la mise en oeuvre d'un procédé selon la revendication 1, avec un support de données, qui comporte au moins un circuit intégré avec des unités de mémorisation et des unités logiques et qui, par une ligne de données, échange des données avec un dispositif extérieur, dans lequel le support de données reçoit par le dispositif extérieur les signaux de fonctionnement et de commande nécessaires au fonctionnement du support de données, et qui accède au dispositif extérieur au moins sur des zones partielles des unités de mémorisation du support de données pour lire et/ou écrire, caractérisé en ce que le circuit intégré comporte de façon supplémentaire un circuit séparé. réalisé en montage fixe ou câblé pour l'émission et/ou la réception de données, pendant une séquence de connexion définie selon un protocole, et qui est utilisé pour la vérification de l'authenticité, dans lequel le circuit séparé réalise la première émission ou réception des données utilisées pour l'examen d'authenticité, indépendamment des unités logiques et des unîtes de mémorisation du support de données. à l'intérieur d'un intervalle de temps défini de la séquence de connexion, dans laquelle la ligne de données ne présente aucun état défini par le protocole.

17. Agencement de support de données selon la revendication 16. caractérisé en ce que la connexion séparée présente une caractéristique réalisée en matériel (informatique) pour le support de données.

18. Agencement de support de données selon la revendication 17. caractérisé en ce que la caractéristique pour les support de données est réalisée par des coupe-circuits, au moins une partie des coupe-circuits étant conducteurs et en ce qu'à chaque coupe-circuits individuel est associée la caractéristique d'un coupe-circuit complémentaire, qui se trouve dans l'état complémentaire correspondant par rapport au coupe-circuit qui lui est associé.

19. Agencement de support de données selon la revendication 18, caractérisé en ce que le circuit séparé spécial comporte un circuit pour vérifier, si le coupe-circuit complémentaire associé à chaque coupe-circuit se trouve dans l'état correct, et en ce que la caractéristique du support de données n'est alors susceptible d'être lue que lorsque tous les coupe-circuits et les coupe-circuits qui leur sont associés se trouvent dans l'état correct.

20. Agencement de support de données selon l'une des revendications 17 à 19, caractérisé en ce que le circuit séparé du support de données transmet, à l'intérieur de l'intervalle de temps t₂ défini par le protocole ISO/IEC 7816-3, la caractéristique du support de données au dispositif extérieur.

21. Agencement de support de données selon la revendications 17, caractérisé en ce que le circuit séparé du support de données génère un nombre aléatoire et combine celui-ci à la caractéristique du support de données.

22. Agencement de support de données selon la revendications 17, caractérisé en ce que le circuit séparé du support de données combine un nombre aléatoire reçu du dispositif extérieur avec la caractéristique du support de données.

23. Agencement de support de données selon la revendications 16, caractérisé en ce que le dispositif extérieur comporte une unité de microprocesseur et un module de sécurité, ce module de sécurité étant susceptible d'être commandé par l'unité de mircroprocesseur, et en ce qu'avec le module de sécurité est susceptible d'être mis en oeuvre un procédé selon les revendications 1 à 15, pour la vérification d'authenticité du support de données.

24. Agencement de support de données selon la revendications 23, caractérisé en ce que le module de sécurité est relié directement au circuit spécial du support de données et en ce qu'entre le module de sécurité et le circuit spécial, sont susceptibles d'être échangées des données directes et bidirectionnelles.

25. Agencement de support de données selon l'une des revendications 22 à 24, caractérisé en ce que le module de sécurité est relié directement aux unités logiques du support de données et en ce qu'entre le module de sécurité et les unités logiques, sont susceptibles d'être échangées des données directes et bidirectionnelles.

26. Agencement de support de données selon l'une des revendications 22 à 25, caractérisé en ce que le module de sécurité est une carte à puce qui est susceptible d'être enfichée dans un emplacement d'enfichage du dispositif extérieur.
